# EUROPÄISCHE PATENTANMELDUNG

(11) **EP 2 813 480 A1**
(43) Veröffentlichungstag der Anmeldung: **17.12.2014**
(21) Anmeldenummer: 13171949.4
(22) Anmeldetag: 14.06.2013
(51) Int. Cl.: C04B 20/12, C04B 28/02, C04B 28/04, C04B 28/06, C04B 28/14, C04B 20/10

(54) **Zementäres System, umfassend mit quervernetztem Schellack beschichtete Beschleuniger-Teilchen**

(71) Anmelder: Construction Research & Technology GmbH, 83308 Trostberg (DE)
(72) Erfinder: Seidl, Wolfgang, 83349 Palling (DE)

(57) **Zusammenfassung**

Vorgeschlagen wird ein zementäres System, welches mit quervernetztem Schellack beschichtete Beschleuniger-Teilchen umfasst, die Verwendung einer Additiv-Komponente, welche die mit quervernetztem Schellack beschichteten Beschleuniger-Teilchen enthält, sowie eine Zementschlämme, welche das zementäre System und Wasser umfasst.

## Beschreibung

Die vorliegende Erfindung betrifft ein zementäres System, welches mit quervernetztem Schellack beschichtete Beschleuniger-Teilchen umfasst, die Verwendung einer Additiv-Komponente, welche die mit quervernetztem Schellack beschichteten Beschleuniger-Teilchen enthält, sowie eine Zementschlämme, welche das zementäre System und Wasser umfasst.

Das Verarbeitungsprofil eines zementären Systems ist in der Applikation von zentraler Bedeutung, weil es den Ablauf der Verarbeitung und den Baufortschritt maßgeblich beeinflusst.

Die Beschleunigung eines zementären Systems, die das Ansteifen/Erstarren und/oder das Erhärten des Systems betreffen kann, wird nach dem Stand der Technik durch Zugabe verschiedener Beschleuniger als Zusatzmittel erreicht. Häufig verwendete Beschleuniger sind z.B. Calciumchlorid, Calciumformiat oder Aluminiumsulfat (P. Hewlett, Lea's Chemistry of Cement and Concrete, Chapter 15.6, 4th edition, 1988, Elsevier, oder J. Cheung et al., Cement and Concrete Research 41, 2011, 1289-1309). Jedoch kann der Zusatz von Beschleunigern je nach Wirksamkeit und Dosierung die Verarbeitungszeit eines zementären Systems so weit verkürzen, dass dieses nicht mehr verarbeitet werden kann, weil der Beschleuniger sofort nach Zugabe des Anmachwassers aktiv wird. Aus diesem Grund können manche Beschleuniger, so z.B. Natriummetaaluminat (NaAlO₂), in zementären Systemen praktisch nicht verwendet werden, weil sie ein viel zu schnelles Ansteifen herbeiführen.

Wird kein Beschleuniger eingesetzt, ist in zementären Systemen zwar die Verarbeitungszeit ausreichend lang, das langsame Ansteifen/Erstarren verzögert aber den Baufortschritt. Beide Effekte zusammen, also lange Verarbeitung und schnelles Ansteifen/Erhärten, sind mit gängigen Beschleunigern in zementären Systemen nur schwer zu erreichen, insbesondere dann, wenn wirksame Beschleuniger eingesetzt werden sollen.

Um in zementären Systemen eine ausreichende Verarbeitungszeit trotz Verwendung eines Beschleunigers zu gewährleisten wurden für verschiedene Anwendungen Beschleuniger verkapselt. Dem Stand der Technik bei verkapselten Beschleunigern gemeinsam ist, dass zur Freisetzung des Beschleunigers ein separates, externes Auslöseereignis notwendig ist, z.B. eine Temperaturänderung (JP2002284555A1, US6840318B2, GB1579356, US7896068B2), Ultraschall (US8047282B2) oder ein pH-Wechsel (RU2307145C). Es gibt aber eine Reihe von zementären Systemen, die nach der Applikation nicht mehr von außen beeinflusst werden können und sollen, wie z.B. verschiedene Trockenmörtel.

Für solche zementären Systeme wird dann ein interner Auslöser benötigt, der zwar durch das Anmischen mit Wasser aktiviert wird, aber erst nach einer gewissen Zeit den Beschleuniger freisetzt. Zusätzlich sollte die Freisetzungszeit innerhalb gewisser Grenzen kontrollierbar verändert werden können, um sie für verschiedene Applikationen anpassen zu können.

Nach dem Stand der Technik ist ein geeigneter interner Auslösemechanismus der Aufbau von osmotischem Druck innerhalb eines beschichteten Teilchens, der nach einiger Zeit durch das Quellen im Kern zum Aufreißen der Beschichtung führt, wodurch eine rasche Wirkstofffreisetzung gegeben ist. Im pharmazeutischen Bereich sind einige solche Systeme bekannt, wie z.B. aus T. Ghosh et al., Journal of Applied Pharmaceutical Science, 1, 2011, pp. 38-49 oder B. Amsden, J. Pharm. Pharmaceut. Sci., 10, 2007, pp. 129-143, jedoch kann dieses Konzept nicht auf ein zementäres System mit pH-Werten von 12 bis 13 übertragen werden, weil die Funktionalität derartiger Beschichtungen bei diesen Bedingungen nicht mehr gegeben ist.

In unserer noch unveröffentlichten internationalen Patentanmeldung PCT/EP2012/073339 werden beschichtete Teilchen eines Wirkstoffs mit kontrollierbaren Freisetzungseigenschaften bei pH-Werten von 10-14 beschrieben, bei denen der Wirkstoff aus einem oder mehreren bauchemischen Additiven zur Beeinflussung eines anorganischen Bindemittels ausgewählt ist, die dadurch gekennzeichnet sind, dass die Beschichtung der Teilchen Schellack beinhaltet. Allerdings werden in unserer PCT/EP2012/073339 keine zementären Systeme beschrieben, die solche mit quervernetztem Schellack beschichteten Beschleuniger-Teilchen umfassen.

Die der vorliegenden Erfindung zugrunde liegende Aufgabe bestand darin, die Nachteile des geschilderten Standes der Technik im Wesentlichen zu vermeiden. Es sollte ein Beschleuniger so modifiziert werden, dass bei dessen Vorliegen in einem zementären System eine lange Verarbeitungszeit in Kombination mit beschleunigtem Ansteifen/Erhärten erfüllt wird. Insbesondere sollten zur Lösung dieser Aufgabe geeignete zementäre Systeme zur Verfügung gestellt werden.

Die oben genannte Aufgabe wurde mit den Merkmalen der unabhängigen Ansprüche gelöst. Die abhängigen Ansprüche beziehen sich auf bevorzugte Ausführungsformen. Insbesondere wurde die oben genannte Aufgabe erfindungsgemäß dadurch gelöst, dass zunächst ein Beschleuniger zu Teilchen umgeformt wurde und danach eine Beschichtung aus Schellack aufgebracht wurde, welche anschließend quervernetzt wurde. Diese mit quervernetztem Schellack beschichteten Beschleuniger-Teilchen werden sodann als Bestandteil eines zementären Systems eingesetzt.

Ein erster Gegenstand der vorliegenden Erfindung betrifft demgemäß ein zementäres System, umfassend mit quervernetztem Schellack beschichtete Beschleuniger-Teilchen.

Schellack ist ein Naturstoff, der aus den Ausscheidungen der Lackschildlaus ("kerria lacca") durch verschiedene Reinigungsprozesse gewonnen wird. Aus chemischer Sicht ist Schellack ein oligomerer Ester, der aus ca. 8 monomeren Einheiten aufgebaut ist, und an einem Ende des Oligomers eine freie Carbonsäuregruppe trägt. Eine Hälfte der Monomere besteht aus 9, 10, 16-Trihydroxypalmitinsäure, die auch als "Aleuritinsäure" bezeichnet wird. Die andere Hälfte setzt sich aus verschiedenen Terpensäuren zusammen, die weitere unterschiedliche chemische Gruppen tragen können. Der Gehalt an freien Carboxylgruppen im Schellack wird über die sogenannte "Säurezahl" definiert, die derjenigen Menge an Kaliumhydroxid entspricht, die zur Neutralisation von einem Gramm Schellack notwendig ist. Sie wird in mg Kaliumhydroxid/g Schellack angegeben und liegt bei vielen Schellacken bei ca. 70 mg/g. Durch Deprotonierung der Carbonsäure wird Schellack wasserlöslich, so dass dieser als ammoniakalische wässrige Lösung mit einem Feststoffanteil von ca. 25 %, z.B. bei Harke Group, Mühlheim an der Ruhr, unter der Bezeichnung "Aquagold®" bezogen werden kann. Alternativ kann der gleiche Typ Schellack in Pulverform z.B. bei der Fa. Stroever, Bremen, mit der Typenbezeichnung "SSB 57" bezogen und unter Rühren und leichtem Erwärmen in ammoniakalischer Lösung gelöst werden.

Die physikalische Umformung des Beschleunigers zu möglichst runden und glatten Teilchen ist die Grundlage für eine qualitativ hochwertige Beschichtung mit gleichmäßiger Schichtdicke und einem homogenen Reaktionsverhalten. Wenn die Beschleuniger-Teilchen nach der Umformung Ecken, Kanten oder Löcher aufweisen, kann im späteren Beschichtungsprozess keine gleichmäßige Beschichtungsdicke erreicht werden, was in Konsequenz zu einer inhomogenen Freisetzung des Beschleunigers führen kann.

Die Beschichtung der Beschleuniger-Teilchen mit quervernetztem Schellack sorgt dafür, dass diese unter den alkalischen Bedingungen des zementären Systems durch den Aufbau von osmotischem Druck im Innern der Teilchen nach einer bestimmten Zeit aufreißen und den Beschleuniger freisetzen. Durch die Beschichtung wird für eine bestimmte Zeit nach dem Anmischen des zementären Systems mit Wasser kein Beschleuniger freigesetzt, so dass die Verarbeitungseigenschaften zunächst nicht beeinflusst werden. Zudem bewirkt das teilweise Auflösen des Beschleunigers während des osmotischen Druckaufbaus nach Freisetzung eine schnelle Reaktion mit der umgebenden zementären Matrix.

Die mit der vorliegenden Erfindung erzielten Vorteile bestehen also insbesondere darin, dass durch die Verwendung von mit quervernetztem Schellack beschichteten Beschleuniger-Teilchen die Verarbeitungseigenschaften eines zementären Systems zu Beginn nicht negativ beeinflusst werden, im weiteren Verlauf aber durch Freisetzung des Beschleunigers ein rasches Ansteifen/Erstarren erzielt wird. Darüber hinaus kann durch Variation der Freisetzungszeit der beschichteten Beschleuniger-Teilchen das Ansteifen/Erstarren eines zementären Systems gezielt verändert werden, wodurch sich in der Formulierung zementärer Systeme weitere Spielräume ergeben. Ein weiterer Vorteil besteht darin, dass die Freisetzung durch einen internen Mechanismus ausgelöst wird, wodurch das erfindungsgemäße zementäre System wie ein herkömmliches zementäres System appliziert werden kann, ohne dass weitere externe Trigger benötigt werden.

Das erfindungsgemäße zementäre System umfasst zweckmäßig ein anorganisches Bindemittel, ausgewählt aus Portlandzement, Tonerdeschmelzzement, Calciumsulfoaluminatzement, Portlandkompositzement nach den Klassen CEM II bis V, hydraulischen Bindemitteln, latent hydraulischen Bindemitteln, puzzolanischen Bindemitteln, alkaliaktivierbaren Alumosilikat-Bindemitteln und Gips, sowie Mischungen davon.

Portlandzement ist das wohl bekannteste hydraulische Bindemittel. Er wurde erstmals im Britischen Patent BP 5022 erwähnt und wurde seither ständig weiterentwickelt. Moderner Portlandzement enthält ca. 70 Gew.-% CaO + MgO, ca. 20 Gew.-% SiO₂ und ca. 10 Gew.-% Al₂O₃ + Fe₂O₃.

Daneben gibt es Kompositzemente auf Basis von Portlandzement und verschiedenen Begleitstoffen, deren Zusammensetzung in DIN EN 197-1, Tabelle 1 geregelt ist und die in die Zementklassen CEM II Portlandkompositzement, CEM III Hochofenzement, CEM IV Puzzolanzement und CEM V Kompositzement V eingeteilt werden. Als Begleitstoffe werden unter anderem Hüttensand, Flugasche, Puzzolan, Trass, Silicastaub, Kalkstein und andere eingesetzt. Diesen Zementen gemeinsam ist, dass sie durch den Anteil an Portlandzement nach Anrühren mit Wasser ein basisches Milieu aufweisen.

Bestimmte Schlacken aus metallurgischen Verfahren können als Zumischungen in sogenannten Portlandkompositzementen, die ebenfalls zu den hydraulischen Bindemitteln zählen, verwendet werden. Ganz allgemein sind hydraulische Bindemittel solche anorganischen Bindemittel, die selbst unter Wasser noch aushärten.

Latent hydraulische Bindemittel können beispielsweise aus Schlacken, insbesondere aus Hochofenschlacke, Hüttensand, Hüttensandmehl, elektrothermischer Phosphorschlacke, Edelstahlschlacke, sowie Mischungen davon ausgewählt werden. Bei diesen Schlacken kann es sich sowohl um industrielle Schlacken, d.h. Abfallprodukte aus industriellen Prozessen, als auch um synthetisch nachgestellte Schlacken handeln. Letzteres ist vorteilhaft, da industrielle Schlacken nicht immer in gleichbleibender Menge und Qualität verfügbar sind. Im Sinne der vorliegenden Erfindung soll unter einem latent hydraulischen Bindemittel vorzugsweise ein anorganisches Bindemittel verstanden werden, bei dem das molare Verhältnis von (CaO + MgO): SiO₂ zwischen 0,8 und 2,5 und besonders bevorzugt zwischen 1,0 und 2,0 liegt.

Hochofenschlacke ist ein Abfallprodukt des Hochofenprozesses. Hüttensand ist granulierte Hochofenschlacke und Hüttensandmehl fein pulverisierter Hüttensand. Das Hüttensandmehl variiert je nach Herkunft und Aufbereitungsform in seiner Mahlfeinheit und Korngrößenverteilung, wobei die Mahlfeinheit Einfluss auf die Reaktivität hat. Als Kenngröße für die Mahlfeinheit wird der sogenannte Blainewert herangezogen, welcher typischerweise in der Größenordnung von 200 bis 1000, vorzugsweise zwischen 300 und 500 m² kg⁻¹ liegt. Je feiner die Vermahlung ist, desto höher ist die Reaktivität. Die typische Zusammensetzung der Hochofenschlacke wurde bereits eingangs erwähnt. Hochofenschlacke weist in der Regel 30 bis 45 Gew.-% CaO, ca. 4 bis 17 Gew.-% MgO, ca. 30 bis 45 Gew.-% SiO₂ und ca. 5 bis 15 Gew.-% Al₂O₃ auf, typischerweise ca. 40 Gew.-% CaO, ca. 10 Gew.-% MgO, ca. 35 Gew.-% SiO₂ und ca. 12 Gew.-% Al₂O₃.

Elektrothermische Phosphorschlacke ist ein Abfallprodukt der elektrothermischen Phosphorherstellung. Sie ist weniger reaktiv als Hochofenschlacke und enthält ca. 45 bis 50 Gew.-% CaO, ca. 0,5 bis 3 Gew.-% MgO, ca. 38 bis 43 Gew.-% SiO₂, ca. 2 bis 5 Gew.-% Al₂O₃ und ca. 0,2 bis 3 Gew.-% Fe₂O₃ sowie Fluorid und Phosphat. Edelstahlschlacke ist ein Abfallprodukt verschiedener Stahlerzeugungsverfahren mit stark variierender Zusammensetzung (siehe Caijun Shi, Pavel V. Krivenko, Della Roy, Alkali-Activated Cements and Concretes, Taylor & Francis, London & New York, 2006, S. 42-51).

Anorganische Bindemittelsysteme, basierend auf reaktionsfähigen wasserunlöslichen Verbindungen auf der Basis von SiO₂ in Verbindung mit Al₂O₃, die im wässrig alkalischen Medium aushärten, sind ebenfalls allgemein bekannt. Solche ausgehärtete Bindemittelsysteme werden auch als "alkaliaktivierbare Alumosilikat-Bindemittel" bzw. "Geopolymere" bezeichnet und sind z.B. in US 4,349,386, WO 85/03699 und US 4,472,199 beschrieben. Als reaktionsfähiges Oxidgemisch können dabei neben Schlacken auch sogenannte puzzolanische Bindemittel wie z.B. Metakaolin, Flugaschen, aktivierter Ton oder Mischungen daraus eingesetzt werden. Das alkalische Medium zur Aktivierung des Bindemittels besteht üblicherweise aus wässrigen Lösungen von Alkalicarbonaten, Alkalifluoriden, Alkalihydroxiden und/oder löslichem Wasserglas. In EP2504296 A1 werden Systeme beschrieben, in denen das Bindemittel in Form einer Hybrid-Matrix aushärtet, in welcher eine Calciumsilikathydrat-Matrix und eine Geopolymer-Matrix im geeigneten Verhältnis zueinander vorliegen und sich so durchdringen, dass die Gesamtmatrix sowohl säurebeständig als auch laugenbeständig ist.

Das puzzolanische Bindemittel ist beispielsweise aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen sowie Mischungen davon ausgewählt. Eine Übersicht erfindungsgemäß geeigneter puzzolanischer Bindemittel findet sich z.B. bei Caijun Shi, Pavel V. Krivenko, Della Roy, Alkali-Activated Cements and Concretes, Taylor & Francis, London & New York, 2006, S.51-63. Die Prüfung auf Puzzolanaktivität kann nach DIN EN 196 Teil 5 erfolgen.

Bei der amorphen Kieselsäure handelt es sich vorzugsweise um eine röntgenamorphe Kieselsäure, d.h. um eine Kieselsäure, die im Pulverdiffraktionsverfahren keine Kristallinität zeigt. Im Sinne der der vorliegenden Erfindung soll Glasmehl ebenfalls als amorphe Kieselsäure betrachtet werden. Die erfindungsgemäße amorphe Kieselsäure weist zweckmäßig einen Gehalt von mindestens 80 Gew.-%, vorzugsweise mindestens 90 Gew.-% SiO₂ auf. Fällungskieselsäure wird großtechnische über Fällungsprozesse ausgehend von Wasserglas gewonnen. Fällungskieselsäure wird je nach Herstellungsverfahren auch Kieselgel genannt. Pyrogene Kieselsäure wird durch Umsetzung von Chlorsilanen wie z.B. Siliciumtetrachlorid in der Knallgasflamme erzeugt. Pyrogene Kieselsäure ist ein amorphes SiO₂-Pulver von 5 bis 50 nm Teilchendurchmesser und einer spezifischen Oberfläche von 50 bis 600 m² g⁻¹.

Mikrosilika ist ein Nebenprodukt der Silicium- bzw. Ferrosiliciumherstellung und besteht ebenfalls größtenteils aus amorphem SiO₂-Pulver. Die Teilchen haben Durchmesser in der Größenordnung von 0,1 µm. Die spezifische Oberfläche liegt in der Größenordnung von 15 bis 30 m² g⁻¹. Demgegenüber ist handelsüblicher Quarzsand kristallin und weist vergleichsweise große Teilchen und eine vergleichsweise kleine spezifische Oberfläche auf. Er dient erfindungsgemäß als inerter Zuschlagsstoff.

Flugaschen entstehen u.a. beim Verbrennen von Kohle in Kraftwerken. Flugasche der Klasse C enthält gemäß WO 08/012438 ca. 10 Gew.-% CaO, während Flugaschen der Klasse F weniger als 8 Gew.-%, vorzugsweise weniger als 4 Gew.-% und typischerweise ca. 2 Gew.-% CaO enthalten.

Metakaolin entsteht bei der Dehydrierung von Kaolin. Während Kaolin bei 100 bis 200 °C physikalisch gebundenes Wasser abgibt, findet bei 500 bis 800 °C eine Dehydroxylierung unter Zusammenbruch der Gitterstruktur und Bildung von Metakaolin (Al₂Si₂O₇) statt. Reines Metakaolin enthält demgemäß ca. 54 Gew.-% SiO₂ und ca. 46 Gew.-% Al₂O₃.

Unter der Sammelbezeichnung "Gips" werden die Modifikationen CaSO₄ (Anhydrit), CaSO₄ · 0,5 H₂O (Hemihydrat) und CaSO₄ · 2 H₂O (Gipsspat) verstanden. Die ersten beiden Modifikationen härten bei der Zugabe von Wasser, sind also anorganische Bindemittel, während Gipsspat nicht härtet. Er kann indessen in den besagten anorganischen Bindemitteln als Sulfatquelle verwendet werden.

Im Gegensatz zu unserer oben genannten PCT/EP2012/073339 ist im erfindungsgemäßen "zementären System" das Vorliegen einer zementären Komponente erforderlich. Die mit quervernetztem Schellack beschichteten Beschleuniger-Teilchen können in Form einer einkomponentigen Formulierung in der zementären Komponente enthalten sein oder von der zementären Komponente getrennt vorgehaltenen werden (sogenannter "kit of parts"). Der Portlandzement und/oder Portlandkompositzement ist prinzipiell anwesend und ist zweckmäßig zu mehr als 3 Gew.-%, vorzugsweise zu mehr als 10 Gew.-% und insbesondere zu mehr als 25 Gew.-% im erfindungsgemäßen zementären System enthalten.

Des Weiteren enthält die Schellack-Beschichtung vorzugsweise mehr als 50 Gew.-% Schellack, besonders bevorzugt mehr als 80 Gew.-% und insbesondere mehr als 95 Gew.-%.

Das erfindungsgemäße zementäre System ist weiterhin dadurch gekennzeichnet, dass die Schellack-Beschichtung bis zu 10 Gew.-%, vorzugsweise bis zu 5 Gew.-% Harnstoff, bezogen auf den Schellack-Anteil, enthält.

Das erfindungsgemäße zementäre System ist weiterhin dadurch gekennzeichnet, dass die Schellack-Beschichtung zweckmäßig 0 bis 30 Gew.-%, vorzugsweise 0 bis 15 Gew.-% und insbesondere 0 bis 5 Gew.-% Füllstoff, bezogen auf den Schellack-Anteil, enthält.

Der besagte Füllstoff ist zweckmäßig aus natürlichem oder gefälltem Calciumcarbonat, amorphem, kristallinem oder pyrogenem Siliziumdioxid, Aluminiumsilikat wie z.B. Kaolin oder Glimmer, Magnesiumsilikathydrat, Aluminiumhydroxid und Magnesiumhydroxid, sowie Mischungen davon ausgewählt.

Die Freisetzungszeit des Beschleunigers hängt allgemein vom Grad der Vernetzung des Schellacks, der Schichtdicke der Schellack-Beschichtung, dem Beschleunigergehalt, dem Teilchendesign sowie dem Beschleuniger selbst ab und kann an die jeweilige Anwendung im zementären System angepasst werden.

Der erfindungsgemäße Schellack liegt zweckmäßig in einer durch thermische Behandlung, Behandlung mit Mikrowellen, elektrischem Plasma, hochenergetischen Partikeln und/oder ionisierender Strahlung quervernetzten Form vor. Vorzugsweise liegt der Schellack in einer durch thermische Behandlung von 1 h bis 7 Tagen, vorzugsweise von 1 h bis 2 Tagen, bei Temperaturen von 80 °C bis 140 °C, vorzugsweise von 100 °C bis 120 °C, quervernetzten Form vor.

Des Weiteren ist das erfindungsgemäße zementäre System dadurch gekennzeichnet, dass der Beschleuniger zweckmäßig aus Salzen von Elementen der Hauptgruppen 1 - III sowie Mischungen davon ausgewählt ist, vorzugsweise aus Lithiumsalzen, insbesondere Lithiumsulfat, Natriumsalzen und Kaliumsalzen, insbesondere Natrium- und Kaliumsilicaten sowie Wassergläsern, Magnesiumsalzen, Calciumsalzen, insbesondere Calciumchlorid, Calciumnitrat, Calciumformiat, Calciumsilikat, Calciumsilikathydrat und Ettringit, sowie Aluminiumsalzen, insbesondere Natriummetaaluminat (NaAlO₂) und Aluminiumsulfat.

Die Beschleuniger-Teilchen sollten einen durchschnittlichen Teilchendurchmesser von 50 bis 1000 µm, vorzugsweise von 100 bis 300 µm aufweisen, während die Schellack-Beschichtung der Beschleuniger-Teilchen eine durchschnittliche Dicke von 1 bis 80 µm, vorzugsweise von 1 bis 30 µm aufweisen sollte.

Die mit quervernetztem Schellack beschichteten Beschleuniger-Teilchen beinhalten zweckmäßig wenigstens zwei Schichten in einer Kern/Schale-Struktur, wobei der Kern den Beschleuniger und die Beschichtung den quervernetzten Schellack enthält.

Das erfindungsgemäße zementäre System ist vorzugsweise dadurch gekennzeichnet, dass der Beschleuniger auf einem Träger aufgebracht, an einen Träger adsorbiert, in einem Träger absorbiert oder mit einem Träger vermischt ist. Der Träger ist in dieser Definition gleichbedeutend mit dem Hilfsstoff, der für den Aufbau des Teilchenkerns verwendet wird. Im Falle des Aufbringens können das z.B. Quarzsand, Glasperlen oder ein anderer unreaktiver, partikulärer Stoff mit geeigneter Körnung sein. Im Falle der Adsorption bzw. Absorption kann der Träger beispielsweise ein partikulärer, poröser Stoff, wie z.B. Kieselgur, porösem Siliziumdioxid, Circosil, ein synthetisches Produkt aus Calciumsilikathydrat, Cellulosepartikel oder ein zeolithisches Material sein. Im Falle, dass der Träger mit dem Beschleuniger vermischt ist, ist der Träger beispielsweise Calciumcarbonat, Talkum, oder ein anderer Hilfsstoff, der dazu geeignet ist, mit dem Beschleuniger zu einem geeigneten Substrat geformt zu werden.

Das erfindungsgemäße zementäre System ist weiterhin dadurch gekennzeichnet, dass die Beschleuniger-Teilchen zusätzlich vorzugsweise eine Schicht zur Diffusionskontrolle und/oder eine Sperrschicht innerhalb der Schellack-Beschichtung enthalten. Bei der Schicht zur Diffusionskontrolle handelt es sich vorzugsweise um Methylcellulose, während es sich bei der Sperrschicht vorzugsweise um Natriumsulfat handelt. Der Vorteil einer Schicht zur Diffusionskontrolle besteht darin, dass die Wasseraufnahme und damit der Zeitpunkt des Aufplatzens der beschichteten Beschleuniger-Teilchen auf Grund von osmotischem Druck verzögert werden. Der Vorteil einer Sperrschicht wie z.B. aus Natriumsulfat besteht darin, dass der ggf. aggressive Beschleuniger (wie z.B. NaAlO₂) nicht im direkten Kontakt mit dem chemisch empfindlichen Schellack steht.

Der Wirkstoffanteil kann durch gezielte Auswahl des Aufbaus des Substrates für das Beschleunigerteilchen variiert werden, so dass eine lokale Überdosierung des zementären Systems mit Beschleuniger vermieden werden kann. Eine lokale Überdosierung sollte vermieden werden, um sekundäre Schadreaktionen durch nachträgliche Aktivierung durch überschüssigen Beschleuniger zu vermeiden.

Das erfindungsgemäße zementäre System ist weiterhin dadurch gekennzeichnet, dass die mit quervernetztem Schellack beschichteten Beschleuniger-Teilchen, bezogen auf das anorganische Bindemittel, zweckmäßig zu 0,1 bis 5,0 Gew.-%, vorzugsweise 0,3 bis 3,0 Gew.-% und insbesondere 0,5 bis 2,0 Gew.-% vorliegen.

Im erfindungsgemäßen zementären System sind die mit quervernetztem Schellack beschichteten Beschleuniger-Teilchen vorzugsweise in Form einer einkomponentigen Formulierung in der das anorganische Bindemittel enthaltenden zementären Komponente enthalten. Insbesondere handelt es sich hierbei um einen Trockenmörtel. In solchen Trockenmörteln wird als anorganisches Bindemittel vorzugsweise Portlandzement eingesetzt.

Im erfindungsgemäßen zementären System können die mit quervernetztem Schellack beschichteten Beschleuniger-Teilchen alternativ aber auch in einer von der das anorganische Bindemittel enthaltenden zementären Komponente getrennt vorgehaltenen Additiv-Komponente vorliegen.

Demgemäß ist ein weiterer Gegenstand der vorliegenden Erfindung auf die Verwendung der erfindungsgemäßen Additiv-Komponente zur Härtung der das anorganische Bindemittel enthaltenden zementären Komponente gerichtet.

Ein weiterer Gegenstand der vorliegenden Erfindung besteht in der Verwendung der erfindungsgemäßen Additiv-Komponente als Beschleuniger für das erfindungsgemäße zementäre System.

Schließlich besteht ein weiterer Gegenstand der vorliegenden Erfindung in einer Zementschlämme, welche das erfindungsgemäße zementäre System und Wasser umfasst. Diese Zementschlämme weist zweckmäßig einem Wasser/Zement-Wert (w/z) von 0,1 bis 1,0, vorzugsweise von 0,2 bis 0,7 und insbesondere von 0,3 bis 0,6 auf.

Die vorliegende Erfindung wird nun anhand der nachfolgenden Beispiele und unter Bezugnahme auf die beigefügten Zeichnungen weiter erläutert. In den Zeichnungen zeigt:
- Fig. 1: die jeweiligen Freisetzungscharakteristiken von unterschiedlich beschichteten Lithiumsulfat-Teilchen in synthetischer Porenlösung,
- Fig. 2: die Freisetzungscharakteristik von mit Schellack beschichteten Lithiumsulfat-Teilchen nach Lagerung bei Raumtemperatur,
- Fig. 3: die Freisetzung von mit Schellack beschichtetem Lithiumsulfat, geträgert auf Glasperlen, nach unterschiedlich langer thermischer Behandlung bei 100 °C,
- Fig. 4: die Freisetzung von thermisch nachbehandelten Lithiumsulfat-Teilchen mit Schellack-Beschichtung nach längerer Lagerung bei Raumtemperatur
- Fig. 5: die Veränderung der Freisetzungscharakteristik von mit Schellack beschichteten Teilchen in Abhängigkeit von den Quervernetzungsbedingungen, und
- Fig. 6: den Aufbau eines mit Schellack beschichteten Beschleunigerteilchens aus Beispiel 3.

### Beispiele

### Beispiel 1 (Referenz)

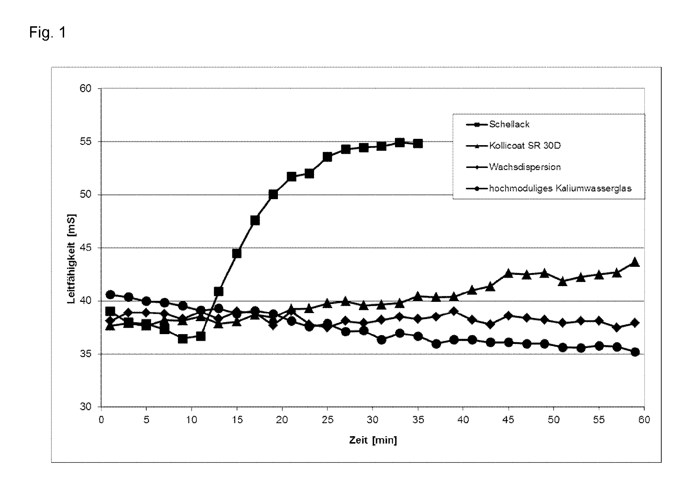

In Fig. 1 ist zu sehen, dass mit unvernetztem Schellack beschichtete Lithiumsulfat-Teilchen im Gegensatz zu mit Wachs, Polyvinylacetat oder Wasserglas beschichteten Lithiumsulfat-Teilchen im alkalischen Milieu eine stufenförmige Freisetzungscharakteristik zeigen. Die Lithiumsulfat-Freisetzung wurde mit einer Leitfähigkeitselektrode in synthetischer Porenlösung gemessen. Bei dieser handelte es sich um eine synthetisch hergestellte alkalische Lösung mit einem pH-Wert von ca. 12,5, die gesättigt an Ca²⁺war und außerdem Na⁺, K⁺ und SO₄²⁻ enthielt und einer ausgepressten Porenlösung eines Portlandzement-Wasser-Gemisches ähnelte. Als Substrat wurden Lithiumsulfat-Teilchen mit einer Teilchengröße von 750 µm Durchmesser verwendet, die durch Extrusion und Verrundung auf einem Drehteller hergestellt worden waren.

### Beispiel 2

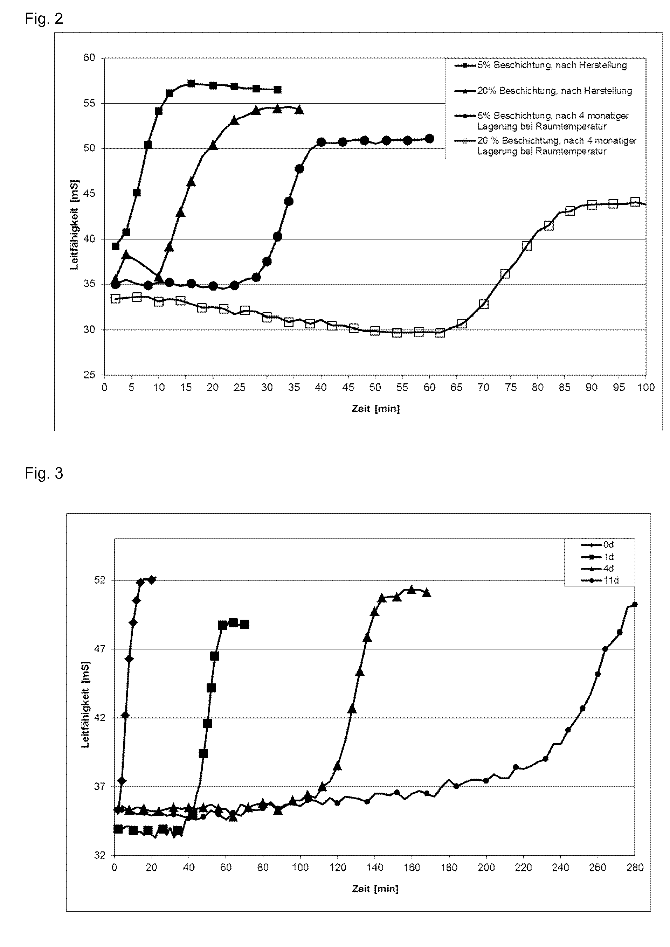

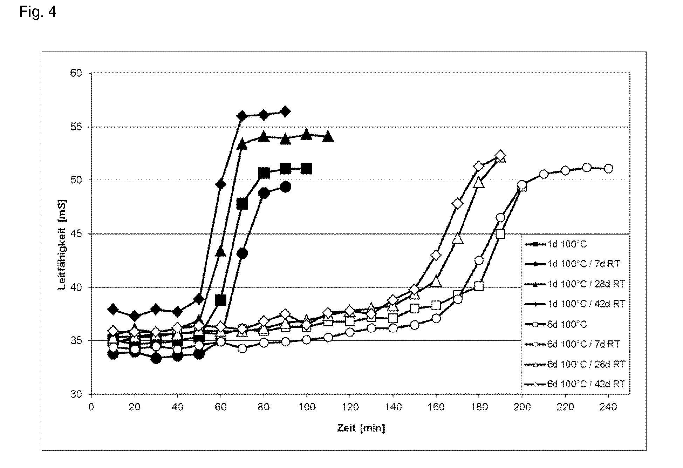

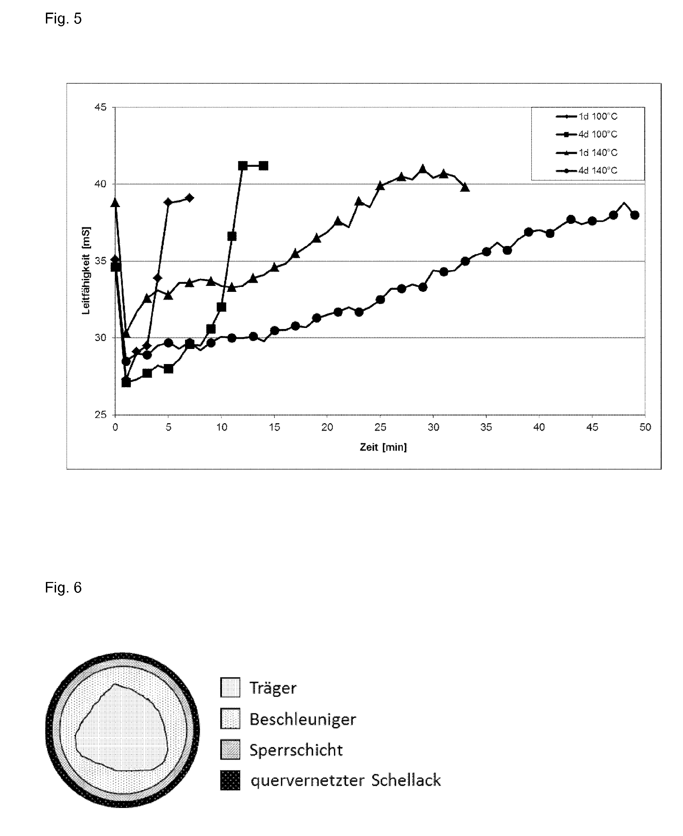

Nach längerer Lagerung bei Raumtemperatur der mit Schellack beschichteten Lithiumsulfat-Teilchen zeigte sich wie zuvor zwar eine stufenartige Freisetzungscharakteristik, jedoch war die Freisetzungszeit deutlich verlängert (Fig. 2), was auf ein Altern der Beschichtung hinwies. Wie sich später zeigte, handelte es sich bei der Alterung um eine nachträgliche Veresterung der -OH und Carboxylgruppen im Schellack, d.h. um Quervernetzung. Wie sich weiterhin zeigte, konnte die Vernetzung durch ein- bzw. mehrtägige Lagerung bei erhöhter Temperatur (100 °C) gefördert werden, siehe Fig. 3. Außerdem trat nach der thermischen Behandlung keine nennenswerte Alterung mehr auf, wie Fig. 4 zeigt. Wurde die Beschichtung aus Schellack indessen zu lange bzw. bei zu hoher Temperatur durchgeführt, dann verlor die Beschichtung die stufenartige Freisetzungscharakteristik und näherte sich einer diffusionskontrollierten Freisetzung an (Fig. 5).

### Beispiel 3

Das Ansteifen wurde angelehnt an DIN EN 1015-9 über den zeitlichen Kraftanstieg beim Eindrücken eines kreisrunden Messingstabes mit einem Durchmesser von 6,175 mm und einer Eindringtiefe von 25 mm in einem zementären System gemessen. Die gemessenen Gewichtswerte wurden in N/mm² umgerechnet, wobei die Erdbeschleunigung mit einem Wert von 10 m/s² angenommen wurde. Die Zeiten, bei denen Eindringwiderstände von 0,5, bzw. 3,5 N/mm² durchschritten wurden, wurden aus den jeweils benachbarten Werten extrapoliert und abweichend von der DIN EN 1015-9 auf 5 min gerundet.

Als zementäres Referenzsystem wurde verwendet:
360 g Wasser
800 g Quarzsand (Typ BCS 412 von der Fa. Strobel Quarzsande, mittlere Korngröße 120 µm)
800 g Zement (Milke CEM I 52,5R)

Als Beschleuniger wurde verwendet:
- Natriummetaaluminat (NaAlO₂), 53-55 % Al₂O₃-Gehalt, fein gemahlen, unstabilisiert, von der Fa. BK Giulini, Ludwigshafen,
- Mit quervernetztem Schellack beschichtete Natriummetaaluminat-Teilchen gemäß nachstehender Herstellung mit unterschiedlichen Freisetzungszeiten von ca. 15 min, im Weiteren "Beschleuniger Teilchen I" genannt, bzw. 45 min, im Weiteren "Beschleuniger Teilchen II" genannt. Die Freisetzungszeiten der Beschleuniger-Teilchen I und II wurden über die Veränderung der Leitfähigkeit in synthetischer Porenlösung bei Raumtemperatur gemessen.

Die Herstellung der Beschleuniger-Teilchen erfolgte in drei Prozessschritten:

### Granulierung

In einem ersten Schritt wurde Natriummetaaluminat (53-55 % Al₂O₃-Gehalt, fein gemahlen, unstabilisiert von der Fa. BK Giulini, Ludwigshafen) mit Quarzsand (Typ BCS 412 von der Fa. Strobel Quarzsande, mittlere Korngröße 120 µm) und Wasser in einem Intensivmischer der Fa. Eirich zu einem Granulat umgeformt. In diesem Prozessschritt zog das Natriummetaaluminat auf die Sandkörner auf und es bildeten sich weitgehend abgerundete Teilchen. Nach Trocknung des Granulats bei 100 °C wurde durch Siebung Über- und Unterkorn außerhalb des Bereichs von 200-300 µm abgetrennt.

### Beschichtung

Das aufbereitete Granulat wurde dann in einen Wirbelschichtcoater (Typ "Unilab" Fa. Bosch/ Hüttlin) überführt und dort zunächst mit Natriumsulfat und anschließend mit Schellack (Typ SSB 57, Fa. Ströver Bremen) bei einer Produkttemperatur von ca. 30-35 °C beschichtet. Die verwendete Natriumsulfat-Lösung hatte einen Feststoffgehalt von 15 Gew.-%. Der Schellack wurde vor dem Beschichten in ammoniakalischer Lösung aufgelöst und auf einen Feststoffgehalt von 10 Gew. % eingestellt.

### Thermische Quervernetzung

In diesem Beispiel wurde die Quervernetzung des Schellacks durch Lagerung der Beschleuniger-Teilchen bei 100 °C für 24 bzw. 75 h realisiert. Im Aufbau unterscheiden sich die Beschleuniger-Teilchen I und II nicht. Für die Lagerung wurden die Beschleuniger-Teilchen mit einem feinpartikulären anorganischen Pulver (Calciumcarbonat) mit einer mittleren Korngröße von ca. 5 µm zu gleichen Gewichtsanteilen vermischt, um ein Verkleben der Teilchen während der Lagerung zu verhindern. Nach der Lagerung wurde der Hilfsstoff über ein Taumelsieb mit einer Maschenweite von < 150 µm wieder abgetrennt. Der Aufbau der Beschleuniger-Teilchen I und II ist in Fig. 6 wiedergegeben.

Die mittlere Korngröße der Beschleuniger-Teilchen I und II betrug ca. 240 µm. Die Gehalte der beschichteten Beschleuniger-Teilchen waren ca. 33 Gew.-% Quarzsand, 33 Gew.-% Natriummetaaluminat, 12 Gew.-% Natriumsulfat (wasserfrei), 22 Gew.-% Schellack (Angaben gerundet).

Das Referenzsystem wurde nach EN 196-1 angemischt. Die Versuche und Messungen wurden bei 23 °C und 50 % rel. Luftfeuchte durchgeführt und die verwendeten Materialien und die Prüfeinrichtung wurde über 24 h in diesem Klima äquilibriert. Der Nullpunkt der nachfolgenden Messung war der Zeitpunkt des Vermischens des Zements mit dem Anmachwasser. Die Ergebnisse sind in der Tabelle 1 wiedergegeben. Die Dosierung des Beschleunigers ist in Gewichtsprozent angegeben, bezogen auf das Gewicht des Zements. Der jeweilige Eindringwiderstand ist in [N/mm²] angegeben, Zeiten sind in Minuten angegeben.

**Tabelle 1: Prüfungsergebnisse des zementären Systems in Anlehnung an DIN EN 1015-9**

| Dosierung des Beschleunigers | Eindringwiderstand nach dem Anmischen | Zeit bis zu einem Eindringwiderstand von 0,5 | Zeit bis zu einem Eindringwiderstand von 3,5 | Δ t zwischen Eindringwiderstand 0,5 und 3,5 |
|---|---|---|---|---|
| 0,0 % | 0,01 | 140 | 215 | 75 |
| 0,5 % NaAlO₂ | 0,22 | 15 | 85 | 70 |
| 0,5 % Teilchen I | 0,01 | 100 | 180 | 80 |
| 0,5 % Teilchen II | 0,01 | 120 | 190 | 70 |
| 1,0 % NaAlO₂ | nicht verarbeitbar | nicht verarbeitbar | nicht verarbeitbar | - |
| 1,0 % Teilchen I | 0,01 | 55 | 110 | 55 |
| 1,0 % Teilchen II | 0,01 | 110 | 165 | 55 |

Das Beispiel zeigt, dass die Beschleuniger-Teilchen I und II im Vergleich zum nicht beschichteten Beschleuniger erfindungsgemäß eine verlängerte Verarbeitungszeit und ein beschleunigtes Ansteifen/Erstarren gegenüber dem Referenzsystem ohne Beschleuniger zeigen. Bei höherer Dosierung des Beschleunigers von 1 Gew.-% ist außerdem ein schnelleres Ansteifen/Erstarren zu beobachten.

## Patentansprüche

1. Zementäres System, umfassend mit quervernetztem Schellack beschichtete Beschleuniger-Teilchen.

2. Zementäres System nach Anspruch 1, umfassend ein anorganisches Bindemittel, ausgewählt aus Portlandzement, Tonerdeschmelzzement, Calciumsulfoaluminatzement, Portlandkompositzement nach den Klassen CEM II bis V, hydraulischen Bindemitteln, latent hydraulischen Bindemitteln, puzzolanischen Bindemitteln, alkaliaktivierbaren Alumosilikat-Bindemitteln und Gips, sowie Mischungen davon.

3. Zementäres System nach Anspruch 1 oder 2, **dadurch gekennzeichnet, dass** der Portlandzement und/oder Portlandkompositzement zu mehr als 3 Gew.-%, vorzugsweise zu mehr als 10 Gew.-% und insbesondere zu mehr als 25 Gew.-% enthalten ist.

4. Zementäres System nach einem der Ansprüche 1 bis 3, **dadurch gekennzeichnet, dass** die Schellack-Beschichtung mehr als 50 Gew.-% Schellack enthält, vorzugsweise mehr als 80 Gew.-% und insbesondere mehr als 95 Gew.-%.

5. Zementäres System nach einem der Ansprüche 1 bis 4, **dadurch gekennzeichnet, dass** die Schellack-Beschichtung bis zu 10 Gew.-%, vorzugsweise bis zu 5 Gew.-% Harnstoff, bezogen auf den Schellack-Anteil, enthält.

6. Zementäres System nach einem der Ansprüche 1 bis 5, **dadurch gekennzeichnet, dass** die Schellack-Beschichtung 0 bis 30 Gew.-%, vorzugsweise 0 bis 15 Gew.-% und insbesondere 0 bis 5 Gew.-% Füllstoff, bezogen auf den Schellack-Anteil, enthält.

7. Zementäres System nach Anspruch 6, **dadurch gekennzeichnet, dass** der Füllstoff aus natürlichem oder gefälltem Calciumcarbonat, amorphem, kristallinem oder pyrogenem Siliziumdioxid, Aluminiumsilikat wie z.B. Kaolin oder Glimmer, Magnesiumsilikathydrat, Aluminiumhydroxid und Magnesiumhydroxid, sowie Mischungen davon ausgewählt ist.

8. Zementäres System nach einem der Ansprüche 1 bis 7, **dadurch gekennzeichnet, dass** der Schellack in einer durch thermische Behandlung, Behandlung mit Mikrowellen, elektrischem Plasma, hochenergetischen Partikeln und/oder ionisierender Strahlung quervernetzten Form vorliegt.

9. Zementäres System nach Anspruch 8, **dadurch gekennzeichnet, dass** der Schellack in einer durch thermische Behandlung von 1 h bis 7 Tagen, vorzugsweise von 1 h bis 2 Tagen, bei Temperaturen von 80 °C bis 140 °C, vorzugsweise von 100 °C bis 120 °C, quervernetzten Form vorliegt.

10. Zementäres System nach einem der Ansprüche 1 bis 9, **dadurch gekennzeichnet, dass** der Beschleuniger aus Salzen von Elementen der Hauptgruppen I - III sowie Mischungen davon ausgewählt ist, vorzugsweise aus Lithiumsalzen, insbesondere Lithiumsulfat, Natriumsalzen und Kaliumsalzen, insbesondere Natrium- und Kaliumsilicaten sowie Wassergläsern, Magnesiumsalzen, Calciumsalzen, insbesondere Calciumchlorid, Calciumnitrat, Calciumformiat, Calciumsilikat, Calciumsilikathydrat und Ettringit, sowie Aluminiumsalzen, insbesondere Natriummetaaluminat (NaAlO₂) und Aluminiumsulfat.

11. Zementäres System nach einem der Ansprüche 1 bis 10, **dadurch gekennzeichnet, dass** die Beschleuniger-Teilchen einen durchschnittlichen Teilchendurchmesser von 50 bis 1000 µm, vorzugsweise von 100 bis 300 µm aufweisen.

12. Zementäres System nach einem der Ansprüche 1 bis 11, **dadurch gekennzeichnet, dass** die Schellack-Beschichtung der Beschleuniger-Teilchen eine durchschnittliche Dicke von 1 bis 80 µm, vorzugsweise von 1 bis 30 µm aufweist.

13. Zementäres System nach einem der Ansprüche 1 bis 12, **dadurch gekennzeichnet, dass** die mit quervernetztem Schellack beschichteten Beschleuniger-Teilchen wenigstens zwei Schichten in einer Kern/Schale-Struktur beinhalten, wobei der Kern den Beschleuniger und die Beschichtung den quervernetzten Schellack enthält.

14. Zementäres System nach Anspruch 13, **dadurch gekennzeichnet, dass** der Beschleuniger auf einem Träger aufgebracht, an einen Träger adsorbiert, in einem Träger absorbiert oder mit einem Träger vermischt ist.

15. Zementäres System nach einem der Ansprüche 13 oder 14, **dadurch gekennzeichnet, dass** die Beschleuniger-Teilchen zusätzlich eine Schicht zur Diffusionskontrolle, vorzugsweise aus Methylcellulose, und/oder eine Sperrschicht, vorzugsweise aus Natriumsulfat, innerhalb der Schellack-Beschichtung enthalten.

16. Zementäres System nach einem der Ansprüche 1 bis 15, **dadurch gekennzeichnet, dass** die mit quervernetztem Schellack beschichteten Beschleuniger-Teilchen, bezogen auf das anorganische Bindemittel, zu 0,1 bis 5,0 Gew.-%, vorzugsweise 0,3 bis 3,0 Gew.-% und insbesondere 0,5 bis 2,0 Gew.-% vorliegen.

17. Zementäres System nach einem der Ansprüche 1 bis 16, **dadurch gekennzeichnet, dass** die mit quervernetztem Schellack beschichteten Beschleuniger-Teilchen in Form einer einkomponentigen Formulierung in der das anorganische Bindemittel enthaltenden zementären Komponente enthalten sind.

18. Zementäres System nach Anspruch 17, **dadurch gekennzeichnet, dass** es sich um einen Trockenmörtel handelt.

19. Zementäres System nach einem der Ansprüche 1 bis 16, **dadurch gekennzeichnet, dass** die mit quervernetztem Schellack beschichteten Beschleuniger-Teilchen in einer von der das anorganische Bindemittel enthaltenden zementären Komponente getrennt vorgehaltenen Additiv-Komponente vorliegen.

20. Verwendung der Additiv-Komponente nach Anspruch 19 zur Härtung der das anorganische Bindemittel enthaltenden zementären Komponente.

21. Verwendung der Additiv-Komponente nach Anspruch 19 als Beschleuniger für das zementäre System gemäß der Definition eines der vorausgehenden Ansprüche 1 bis 19.

22. Zementschlämme, umfassend das zementäre System gemäß der Definition eines der Ansprüche 1 bis 19 und Wasser.

23. Zementschlämme nach Anspruch 22 mit einem Wasser/Zement-Wert (w/z) von 0,1 bis 1,0, vorzugsweise von 0,2 bis 0,7 und insbesondere von 0,3 bis 0,6.
